# EUROPEAN PATENT APPLICATION

(11) **EP 2 696 279 A1**
(43) Date of publication of application: **12.02.2014**
(21) Application number: 11862348.7
(22) Date of filing: 24.08.2011
(51) Int. Cl.: G06F 9/38

(54) **JUMP INSTRUCTION CODING METHOD AND SYSTEM**

(30) Priority: 01.04.2011 CN 201110081939
(71) Applicant: ZTE Corporation, Shenzhen, Guangdong 518057 (CN)
(72) Inventor: LI, Lihuang, Shenzhen Guangdong 518057 (CN); PAWAWONGSAK, Paul, Shenzhen Guangdong 518057 (CN); CAO, Qingxin, Shenzhen Guangdong 518057 (CN)
(74) Representative: Ahner, Philippe
(86) International application number: PCT/CN2011/078846
(87) International publication number: WO 2012/129886

(57) **Abstract**

A jump instruction coding method and system are provided, the method and system can both obtain a LOOP_BEGIN instruction from a memory in advance relative to the operation cycle when executing a loop; finish the obtainment of the LOOP_BEGIN instruction when the execution of the last instruction of a loop body is completed. The method and system simplify hardware logic from the software level via pre-processing assembly coding and guarantee to solve the problem of PIPELINE needing to be suspended during loop retrace without adding additional logic, thus saving much hardware logic and hardware resources, conserving area and cost, simplifying implementation and enhancing the reliability of the implemented scheme.

## Description

### TECHNICAL FIELD

The disclosure relates to the field of processors, and in particular to a jump instruction coding method and system.

### BACKGROUND

At present, one of the reasons for performance loss of processor may be the execution of instructions of a loop. One loop body includes N instructions, which needs to be re-executed for multiple times. The last instruction of the loop body can be represented by a LOOP_END. When the LOOP_END is observed at decoding stage of a PIPELINE (instruction assembly line), the PIPELINE has to be suspended to wait for a MEMORY if a LOOP_BEGIN (the first instruction of the loop body) is obtained from the MEMORY at this time, the waiting period is dependent on the speed and architecture of the MEMORY. For common processors, the instructions of a loop are used frequently, so that a performance loss due to such a cost is significant. There are two existing solutions, one is adding a LOOP_BUFFER (loop buffer). When the loop body is executed for the first time, the instructions of the loop body are stored in the LOOP_BUFFER, so that when they are executed for the second time, there is no need to obtain the LOOP_BEGIN from the MEMORY but directly obtain from the BUFFER. In this way, the PIPELINE does not need to be suspended. For such an implemented scheme, there is a need to add a BUFFER and corresponding hardware logic, which makes the circuit very complicated, and is expensive to implement. The other one is adding a counter, for example, adding a dedicated LOOP_BEGIN instruction including information about the number of the instructions of the loop body, it is counted from the first instruction, and decremented by one whenever a instruction is executed, thus the arrival of the LOOP_END can be known in advance, the instruction can be obtained from the MEMORY in advance, during which the PIPELINE does not need to be suspended. For this scheme, it is also required to add hardware logic, and more hardware resources are required for nested loops. Further, if the number of the instructions of the loop body is less than N (N represents cycles required for obtaining instructions from the MEMORY), this scheme does not have applicability.

### SUMMARY

In view of the above, the main purpose of the disclosure is to provide a jump instruction coding method and system to simplify hardware logic and enhance the reliability and performance of implementation.

To this end, the technical schemes provided by the disclosure are implemented by:
a jump instruction coding method including:
   obtains a LOOP_BEGIN instruction from a memory in advance relative to the operation cycle when executing a loop;
   finishes the obtainment of the LOOP_BEGIN instruction when the execution of the last instruction of a loop body is completed.

Wherein the method for obtaining the LOOP_BEGIN instruction from the memory in advance relative to the operation cycle may be:
advancing a flag bit of the last instruction of the loop body for N cycles and generating a required executable file exe.bin;
the N cycles correspond to the operation cycle running from the LOOP_BEGIN instruction to the last instruction of the loop body.

Wherein the process for finishing the obtainment of the LOOP_BEGIN instruction may include:
observing the last instruction of the loop body N cycles in advance by hardware when the exe.bin instruction is executed, thus the obtainment of the instruction from the MEMORY is advanced by N cycles.

Wherein, the method may further include:
continuing, by an instruction PIPELINE involved with execution of the loop, to work when there is no need to wait.

Wherein the method is accomplished by an assembler (ASS).

A jump instruction coding system including an operation cycle advancing unit and a LOOP_BEGIN instruction obtaining unit, wherein
the operation cycle advancing unit is configured to confirm that a LOOP_BEGIN instruction is needed to be obtained from a memory in advance relative to the operation cycle when executing a loop;
the LOOP_BEGIN instruction obtaining unit is configured to finish the obtainment of the LOOP_BEGIN instruction when the execution of the last instruction of the loop body is completed.

Wherein when obtains the LOOP_BEGIN instruction from the memory in advance relative to the operation cycle, the operation cycle advancing unit may be configured to:
advance a flag bit of the last instruction of the loop body for N cycles and generate a required executable file exe.bin;
the N cycles correspond to the operation cycle running from the LOOP_BEGIN instruction to the last instruction of the loop body.

Wherein when finishes the obtainment of the LOOP_BEGIN instruction, the LOOP_BEGIN instruction obtaining unit may be configured to:
trigger the execution of the exe.bin instruction, make the last instruction of the loop body be observed N cycles in advance by hardware, thus the obtainment of the instruction from the MEMORY is advanced by N cycles.

Wherein the system may further include a PIPELINE, involved with execution of the loop, which is configured to continue to work when there is no need to wait.

Wherein the system may be provided in an ASS.

The jump instruction coding method and system according to the disclosure simplify hardware logic from the software level via pre-processing assembly coding of the assembler (ASS) and guarantee to solve the problem of PIPELINE needing to be suspended during loop retrace without adding additional BUFFERs and counters or other logic, thus saving much hardware logic and hardware resources, conserving area and cost, simplifying implementation and enhancing the reliability of the implemented scheme.

### BRIEF DESCRIPTION OF THE DRAWINGS

Fig. 1 is a schematic diagram of a jump instruction coding flow according to an embodiment of the disclosure;
Fig. 2 is a jump instruction coding system diagram according to an embodiment of the disclosure.

### DETAILED DESCRIPTION

Since there are N cycles needed to be consumed when obtaining a LOOP_BEGIN instruction from the MEMORY as the loop is retraced, the pipeline has to be suspended for N cycles if the instruction is obtained from the MEMORY until a LOOP_END instruction is arrived, resulting in a great loss of performance. In order to avoid this loss, the obtainment of the instruction from the MEMORY can be advanced by N cycles in hardware, so that when the execution of the LOOP_END is completed, the LOOP_BEGIN instruction has been obtained from the MEMORY, so there is no need for the PIPELINE to suspend.

The scheme described above can be accomplished by an assembler (ASS). The ASS is able to encode the assembly instructions written by a programmer into binary or hexadecimal instructions. A flag bit of the LOOP_END can be advanced by N cycles (i.e., the operation cycle running from the LOOP_BEGIN to the LOOP_END) by the ASS during a coding process, and a required executable file exe.bin is generated. When the exe.bin instruction is executed, the LOOP_END can be observed N cycles in advance by hardware, thus the obtainment of the instruction from the MEMORY can be advanced by N cycles, which eliminates the suspend of the PIPELINE, achieves high performance.

A sequence of assembly code instructions which has been written can be exemplified as follows:
Inst0;
Inst1;
Inst2; LOOP_START;
Inst3;
Inst4;
Inst5;
Inst6; LOOP_END
wherein Inst2 to Inst6 represent the instructions of the loop body.

A sequence of machine codes assembled by the ASS can be exemplified as follows:
00000001;
10000000;
20000000;
30000000;
40000002;
50000000;
60000000;
wherein a LOOP_MARKER (loop label) occupies the lower 2 bits of each instruction, wherein 1 represents LOOP_BEGIN, 2 represents LOOP_END, and 0 represents no loop label. The representation described above is just one of coding method, and is not unique.

As can be seen, the LOOP_END is 2 instructions ahead during the coding process. Inst6 corresponds to LOOP_END, which is encoded at Inst4 in machine codes, and 2 instructions ahead. This process is accomplished by the assembler automatically, the loop body written by the programmer is still Inst2-Inst6. When the instruction of machine codes is executed, and the execution advances to Inst4, LOOP_END (i.e., the value of the lower 2 bits of machine codes is 2) is observed, then the obtainment of Inst2 from the MEMORY begins at this time. When the execution advances to Inst6, Inst2 has been obtained from the MEMORY already (it is assumed here that the obtainment of the instruction from the MEMORY needs 2 cycles), then the instructions are executed sequentially from Inst2 again. When the execution advances to Inst4, Inst2 is obtained again from the MEMORY. In this way, circular execution from Inst2 to Inst6 is formed until the loop exits.

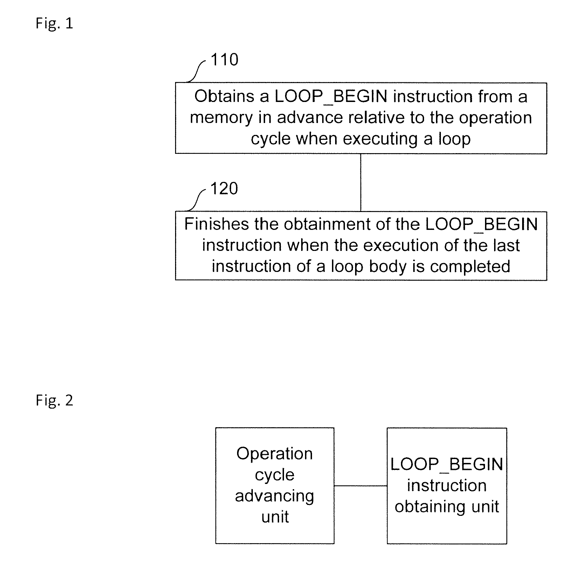

It can be seen from the foregoing technology description that the operation thoughts of the jump instruction coding method according to the disclosure can be represented as the process shown in Fig.1; the process includes the following steps:
step 110: obtains a LOOP_BEGIN instruction from a memory in advance relative to the operation cycle when executing a loop.
step 120: finishes the obtainment of the LOOP_BEGIN instruction when the execution of the last instruction of a loop body is completed.

It should be noted that the method for obtaining the LOOP_BEGIN instruction from the memory in advance relative to the operation cycle may be: advancing a flag bit of the last instruction of the loop body for N cycles and generating a required executable file exe.bin; the N cycles correspond to the operation cycle running from the LOOP_BEGIN instruction to the last instruction of the loop body.

Further, the process for finishing the obtainment of the LOOP_BEGIN instruction may include: the last instruction of the loop body is observed N cycles in advance by hardware when the exe.bin instruction is executed, thus the obtainment of the instruction from the MEMORY is advanced by N cycles. The PIPELINE involved with execution of the loop may further continues to work when there is no need to wait.

Additionally, the disclosure may be accomplished by an ASS.

In order to ensure the smooth achievement of the foregoing technical description and operation thoughts, it can be arranged as shown in Fig.2. With reference to Fig.2, a jump instruction coding system diagram according to an embodiment of the disclosure is shown. The system includes an operation cycle advancing unit and a LOOP_BEGIN instruction obtaining unit which are connected with each other.

In practical applications, the operation cycle advancing unit is capable of confirming that a LOOP_BEGIN instruction is needed to be obtained from a memory in advance relative to the operation cycle when executing a loop; and the LOOP_BEGIN instruction obtaining unit is capable of finishing the obtainment of the LOOP_BEGIN instruction when the execution of the last instruction of the loop body is completed.

It should be noted that when obtains the LOOP_BEGIN instruction from the memory in advance relative to the operation cycle, the operation cycle advancing unit can be configured to: advance a flag bit of the last instruction of the loop body for N cycles and generate a required executable file exe.bin; the N cycles correspond to the operation cycle running from the LOOP_BEGIN instruction to the last instruction of the loop body.

In addition, when finishes the obtainment of the LOOP_BEGIN instruction, the LOOP_BEGIN instruction obtaining unit can be configured to: trigger the execution of the exe.bin instruction, make the last instruction of the loop body be observed N cycles in advance by hardware, thus the obtainment of the instruction from the MEMORY is advanced by N cycles. The PIPELINE involved with execution of the loop may further continues to work when there is no need to wait.

In addition, the system according to the disclosure can be provided in the ASS.

To sum up, regardless of method or system, it can be seen that the jump instruction coding method and system according to the disclosure both simplify hardware logic from the software level via pre-processing assembly coding of ASS and guarantee to solve the problem of PIPELINE needing to be suspended during loop retrace without adding additional BUFFERs and counters or other logic, thus saving much hardware logic and hardware resources, conserving area and cost, simplifying implementation and enhancing the reliability of the implemented scheme.

The preceding description of preferred embodiments of the disclosure is merely presented for illustration, and is not intended to limit the scope of the disclosure.

## Claims

1. A jump instruction coding method comprising:
obtaining a LOOP_BEGIN instruction from a memory in advance relative to the operation cycle when executing a loop;
finishing the obtainment of the LOOP_BEGIN instruction when the execution of the last instruction of a loop body is completed.

2. The method according to claim 1, wherein the method for obtaining the LOOP_BEGIN instruction from the memory in advance relative to the operation cycle is:
advancing a flag bit of the last instruction of the loop body for N cycles and generating a required executable file exe.bin;
the N cycles correspond to the operation cycle running from the LOOP_BEGIN instruction to the last instruction of the loop body.

3. The method according to claim 2, wherein the process for finishing the obtainment of the LOOP_BEGIN instruction comprises:
observing the last instruction of the loop body N cycles in advance by hardware when the exe.bin instruction is executed, thus the obtainment of the instruction from the MEMORY is advanced by N cycles.

4. The method according to any of claim 1 to 3, wherein the method further comprises:
continuing, by an instruction PIPELINE involved with execution of the loop, to work when there is no need to wait.

5. The method according to any of claim 1 to 3, wherein the method is accomplished by an assembler (ASS).

6. A jump instruction coding system comprising an operation cycle advancing unit and a LOOP_BEGIN instruction obtaining unit, wherein
the operation cycle advancing unit is configured to confirm that a LOOP_BEGIN instruction is needed to be obtained from a memory in advance relative to the operation cycle when executing a loop;
the LOOP_BEGIN instruction obtaining unit is configured to finish the obtainment of the LOOP_BEGIN instruction when the execution of the last instruction of the loop body is completed.

7. The system according to claim 6, wherein when obtains the LOOP_BEGIN instruction from the memory in advance relative to the operation cycle, the operation cycle advancing unit is configured to:
advance a flag bit of the last instruction of the loop body for N cycles and generate a required executable file exe.bin;
the N cycles correspond to the operation cycle running from the LOOP_BEGIN instruction to the last instruction of the loop body.

8. The system according to claim 7, wherein when finishes the obtainment of the LOOP_BEGIN instruction, the LOOP_BEGIN instruction obtaining unit is configured to:
trigger the execution of the exe.bin instruction, make the last instruction of the loop body be observed N cycles in advance by hardware, thus the obtainment of the instruction from the MEMORY is advanced by N cycles.

9. The system according to any of claim 6 to 8, wherein the system further comprises a PIPELINE, involved with execution of the loop, which is configured to continue to work when there is no need to wait.

10. The system according to any of claim 6 to 8, wherein the system is provided in an ASS.
